# EUROPEAN PATENT APPLICATION

(11) **EP 2 154 793 A2**
(43) Date of publication of application: **17.02.2010**
(21) Application number: 09010379.7
(22) Date of filing: 12.08.2009
(51) Int. Cl.: H04B 7/06, H04W 52/36, H04W 52/34

(54) **Dynamic switching system and method between single and multiple antenna transmission**

(30) Priority: 14.08.2008 ES 200802440
(71) Applicant: Vodafone Group PLC, Newbury Berkshire RG14 2FN (GB); Vodafone España, S.A.U., 28108 Alcobendas, Madrid (ES)
(72) Inventor: Dominguez, Romero, Francisco Javier, 28020 Madrid (ES); Le Pêzennec, Yannick, 28020 Madrid (ES); McWilliams, Brendan, 28020 Madrid (ES)
(74) Representative: Carvajal y Urquijo, Isabel

(57) **Abstract**

Dynamic switching system between multiple and single antenna transmission in UTRAN networks comprising, at least, two antennas (200,201) connected in parallel with the data (101) of the Node B (100), through two connection branches (102,103) where the first branch (102) connects the data (101) with the first antenna (200) through a first switch mean (105), a first MCPA (107) and a first RF module (109); and the second branch (103) connects the data (101) with the second antenna (201) through a second switch mean (106), a second MCPA (108) and a second RF module (110).

## Description

### Technical field of the invention

The invention relates to a system and method of dynamic switching between single antenna transmission systems and multiple antenna transmission systems in UTRAN networks.

### Background of the invention

Multiple antenna transmission is a useful technology in order to increase spectrum efficiency of the radio access network (e.g. Transmit diversity schemes) as well as increase the offered throughput to users (e.g. Multiple Input Multiple Output technology). However in order to optimize the performance of the system, it is useful to have the ability to switch between multiple antenna transmission and single antenna transmission, because in many scenarios there are benefits in switching from one to another as highlighted below:
(a) Performance optimization: Throughput performance is heavily dependent on the radio conditions. In bad radio conditions the use of single antenna transmission can achieve better performance. For example the use of receiver (Rx) diversity at the UE with single antenna transmission at BS can outperform MIMO at cell edge.
(b) Energy savings: From a power efficiency point of view it is often more efficient to have a single multiple carrier power amplifier (MCPA) used for transmission (single antenna transmission) rather than transmitting the same overall energy across two MCPA (multiple antenna transmission). The reason for this is that the operation of high power amplifiers at low output power is particularly inefficient. For example in scenarios where the traffic is low, it is beneficial switching to single antenna transmission to save energy whilst not compromising performance. As highlighted by the above practical scenarios, providing means to switch between single and multiple antenna transmission is particularly useful in the radio access network in order to optimize the efficiency of the system.
(c) Interoperability issues: In many systems (e.g. WCDMA) due to the late introduction of multiple antenna transmission schemes in network deployments, issues of interoperability have often occurred (due to the impossibility for terminal vendors to perform proper inter-operability testing, IOT), hence it is useful to have the possibility to switch between multiple antenna and single antenna transmission in these cases in order to avoid interoperability issues (e.g. dropped calls).
(d) MCPA failure: Whenever a failure occurs in one of the multiple MCPA there is a need to recover the transmission over a single MCPA (e.g. reconfiguration to single antenna transmission) causing reconfiguration from multiple antenna transmission to single antenna transmission.

In conventional solutions, each cell has to be configured statically either as Space Time Transmit Diversity (STTD) (with all the settings associated when the cell is initiated), or configured as normal transmission with single transmitter (Tx) antenna (1 MCPA). This reconfiguration would involve stopping the transmission to perform the reconfiguration and restart the cell which results in service interruption.

US patent application No US2004/0203347 describes a plurality of mechanisms for selecting a set of antennas for use in a wireless communication system. The selected set of antennas is for use in communicating data in a wireless local area network (WLAN) comprising an access point and a plurality of mobile stations. The access point includes a baseband chip capable of adapting various radio frequency (RF) units. Each RF unit in turn includes a plurality of RF sub units, each of which connects to a plurality of antennas. The access point thus includes a number of antennas that, together with the RF units and the baseband chip, form a smart antenna. To identify the selected set of antennas to communicate with a particular mobile station, the access point initially uses a first set of antennas each in a RF sub unit. From this first set of antennas, the access point identifies a first set of "winner" antennas and a first set of "non-winner" antennas. From the first set of winner antennas, the access point identifies a first set of winner RF sub units each connecting to a winner antenna in the first set of winner antennas. From each winner RF sub unit, the access point identifies a final winner. The access point then uses the final winner antenna in the selected set of antennas. The access point also uses the first set of non-winner antennas in the selected set of antennas.

US patent US5175878 describes a system wherein the antennas of a cellular telephone system are each connected to a signal divider/combiner array which divides/combines the antenna connecting path(s) into a plurality of antenna-radio/radio-antenna connecting paths. The divider array aspect is used for signal reception and the combiner array aspect is used for signal transmission. Each of these antenna connecting paths is connected to a controllable switch which in turn selectively couples it to/from a second plurality of radio transceivers. The antenna transmission/receive paths comprising the signal divider/combiners are embodied as strip type transmission lines in a multi layer printed circuit board (PCB) with all the paths having equal transmission losses. Micro-vias are provided to permit electrical access to the various layers. The controllable switches are surface mounted on the outside of the PCB and are coupled to the various dividers/combiner through the micro-vias. Remote control of the switches permits a radio channel unit of transceiver to be connected to any one of the array of antennas.

US patent application No US20070205959 describes an apparatus comprising at least two antennas are selected from a plurality of antennas which consist of at least two antennas having polarization characteristics or directivities different from one another, and which are arranged such that spatial fading correlations between the antennas are low, and a multiple input multiple output communication is conducted by using the selected antennas.

US patent application No US20060222101 describes an adaptive MIMO communications system, including a multifunctional reconfigurable antenna with a selectively alterable effective physical antenna array configuration and radiation/polarization properties, which configuration and properties is a component in the optimization of the adaptive system parameters. The multifunctional reconfigurable antenna comprises a plurality of antenna components and a plurality of selectively controllable switches coupling selected ones of the plurality of antenna components together into a multifunctional reconfigurable sub-array of antenna components. A processing unit coupled to the multifunctional reconfigurable antenna determines communication channel conditions for generating adaptive control signals to the plurality of selectively controllable switches to selectively apply a selected space-time coding protocol or a selected beam forming protocol together on the plurality of antenna components depending on channel conditions.

### Summary of the invention

The proposed solution solves the problem of reconfiguration of the cell whilst allowing the flexibility of the dynamic switching through setting up always the transmission in the network as a multiple antenna transmission even if in practice transmitting over a single antenna (the Tx signals on the 2^{nd} antenna being nullified) in order to allow seamless reconfigurations (without service outage of the system) between single antenna and multiple antenna transmission modes.

For the case when only one antenna is being used for transmission both the RAN and the UE are configured as if the control and data channels were transmitted with the relevant multiple antenna transmission scheme with the particularity that the power settings for all the diversity antennas used for transmission would be set to zero. The power settings of the antenna are only known to the network, the UE is always configured as operating in multi-antenna transmission.

For example, in the case of UMTS, the STTD scheme is indispensable for the transmission of UTRAN channels over the two antennas (MIMO is only applied to the HS-PDSCH physical channel whilst STTD needs to be applied to most remaining control plane and user plane channels in order to split the power equally between the two MCPA). Hence, in order to make possible dynamic switching between single antenna and multiple antenna transmission (without service outage of the system), STTD would be set as ON all the time even if transmitting on a single antenna, with the diversity antenna power settings set to zero when switching to single antenna transmission. This way fast reconfigurations can be effected within the radio network in a transparent way for the UE (CP or UP reconfiguration over the Iub interface - i.e. between RNCs and Node Bs, no RRC reconfiguration required). There is no impact to the UE (except in terms of overall received power depending on the power settings in the reconfiguration of the radio link) because even if STTD is on the transmission over the main antenna used for single transmission (antenna 1) is not STTD encoded.

The dynamic switching between single antenna transmission and multiple antenna transmission is performed through control plane signaling across the Iub interface by only switching the power settings for the CPICH of antenna I and antenna 2, (without service outage of the system). The sum of the power of two branches remain unchanged, hence there is no reconfiguration of the CPICH power required (no need for "cell reconfiguration request" procedure). The user configuration remains unaffected, no impact in terms of coverage as the same energy is transmitted whether it is a single or multiple antenna transmission to the user.

Many different algorithms can trigger the reconfiguration. Some examples of conditions under which the switching from multiple to single antenna transmission might be triggered include:
- If all UE have Channel Quality Indicator (CQI)<x dB AND Power consumption <50 % for both MCPA,
- If MCPA alarm is detected.
- If throughput counters statistics decrease when activating multiple antenna, then switch to single antenna.
- If there are no users supporting MIMO. This can be detected directly in the first RRC Connection Request message with the Release information.
- If there is an MCPA failure.

The proposed dynamic switching solution between single antenna and multiple antenna transmission will allow exploiting the benefits of both approaches and allow optimizing the efficiency of multiple antenna systems, without service outage of the system.

This is particularly useful within the framework of the deployment of HSDPA MIMO in order to optimize efficiencies whilst upgrading to multiple antenna transmission.

### Brief description of the drawings

Following, it is briefly described some figures that helps to better understand the invention. The figures also describe an embodiment of the present invention, as non-imitative example:
FIGURE 1.- Block diagram of the dynamic switching system, object of the present invention, solution to allow dynamic switching between single and multiple antenna transmission (STTD channel configuration for all non-MIMO channels except CPICH and SCH channels).
FIGURE 2.- Block diagram of the dynamic switching system, object of the present invention, with a solution to allow dynamic switching between single and multiple antenna transmission (channel configuration for P-CPICH).

### Preferred embodiment of the invention

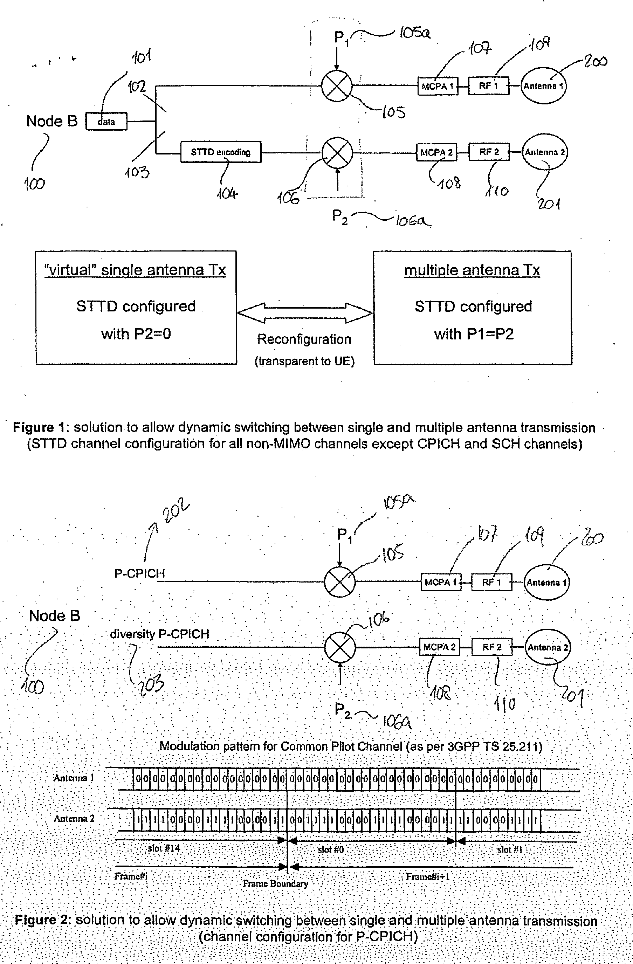

As can be shown in the **Figure 1** the dynamic switching system comprises, at least, two antennas (200,201) connected in parallel with the data source (101) of the node B (100), through two connection branches (102,103).

The first branch (102) connects the data source (101) with the first antenna (200) through a first switch mean (105), a first MCPA (107) and a first RF module (109).

The second branch (103) connects the data source (101) with the second antenna (201) through a second switch mean (106), a second MCPA (108) and a second RF module (110).

Whether the first switch mean (105) is activated or not depends on the value of a signaling indicator, allowing or not the connection with the power source P1 (105a). Analogously, the value of the same signaling indicator determines whether the second switch mean (106) is activated or not activating the power source P2 (106a) in dependence upon the value of a bit transmitted from the RNC to the node B.

The above described configuration implies that a "virtual" single antenna transmission can be achieved by setting P2=0, wherein the second switching mean (106) is not activated, P1=X Watt, and therefore, all the power is in the first antenna (200). Otherwise, the multiple antenna transmission can be achieved with P1=P2=X/2 Watt, with both switching means (105,106) open.

In the **Figure 2** it is shown the solution to transmit the CPICH and SCH channels with diversity in the transmission of the P-CPICH channel (203) wherein if there is only one "virtual" single antenna (200) only the P-CPICH channel (202) is transmitted.
**In one specific example of an embodiment of the invention, the following settings are assumed:**
(a) UTRAN configuration:
   - P1=CPICH antenna 1 at 33 dBm.
   - P2=CPICH antenna 2 (diversity antenna) at 33 dBm
   - STTD activated for all channels (common, dedicated, and HS channels).
(b) UE configuration:
   - 36 dBm CPICH (sum of the two antenna branches if Tx diversity activated).
   - STTD activated for every user via radio bearer (re-)configuration.
   The dynamic switching between single antenna transmission and multiple antenna transmission is performed through control plane signaling across the Iub interface by switching only the power settings for the CPICH of antenna 1 and antenna 2. The sum of the power of two branches remain unchanged, hence there is no reconfiguration of the CPICH power required (no need for "cell reconfiguration request" procedure). The user configuration remains unaffected, no impact in terms of coverage as the same energy is transmitted whether it is a single or multiple antenna transmission to the user.
   An indication from the RNC to the Node B is required to perform the dynamic switching this can be achieved with a single bit indicating whether P1=P2=x or whether P1=2x and P2=0. This can be carried by an information element appended to any control plane message affecting cell level parameters (e.g. "common transport channel reconfiguration" by CRNC). It can also be conveyed as an independent I bit indicator over the Iub control plane.
(c) UTRAN reconfiguration for single antenna transmission:
   - P1=CPICH antenna 1 at 36 dBm.
   - P2=0 (no transmission)
   - STTD activated for all channels (common, dedicated, and HS channels).
(d) Same UE configuration as in the previous example, receiving 36 dBm just with 1 branch.

The dynamic switching method comprises, at least, the following steps:
(i) a first step of trigger the switching from multiple to single antenna transmission or vice versa;
(ii) a second step of sending the CP message carrying the switching indicator from RNC to the Node B;
(iii) a third step of open or not open the switch mean (105,106) depending on the value of the signaling indicator; without service outage of the system.
wherein if the signaling indicator value is "0", then P1=P2=X and both switch means (105,106) are open, and therefore the system is configured in a multiple antenna transmission; and if the value is "1" then P2=0 and the system is configured in a single antenna transmission.

Many different conditions can trigger the reconfiguration. Some examples of conditions under which the switching from multiple to single antenna transmission might be triggered include:
- If all UE have CQI<x dB AND Power consumption <50 % for both MCPA,
- If MCPA alarm is detected.
- If throughput counters statistics decrease when activating multiple antenna, then switch to single antenna.
- If there are no users supporting MIMO. This can be detected directly in the first RRC Connection Request message with the Release information.
- If there is an MCPA failure.

## Claims

1. A method of dynamic switching between a multiple antenna transmission mode and single antenna transmission mode in a cellular telecommunications network, comprising:
- triggering a switching event between multiple antenna transmission mode and single antenna transmission mode;
- sending a message carrying a switching indicator to a base station node;
- activating switch means in dependence on the switching indicator for controlling an antenna power source;
wherein
performing a transmission power increasing of a power source of an active antenna by the same value of power as amount of a power source of an antenna that is switched-off when setting the single transmission mode; or
performing a transmission power redistribution among power sources of antennas when setting the multiple transmission mode, in order to maintain substantially the same transmission power of each antenna power source; thereby total transmission power remaining the same and without being interrupted.

2. Method of claim 1 **characterized in that** the multiple antenna transmission mode comprises a first antenna (200) with a first power source (105a) governed by a first switch means (105) and a second antenna (201) with a second power source (106a) governed by a first switch means (106), the two antennas being connected in parallel with a base station node.

3. Method of claim 1 **characterized in that** the cellular telecommunications network is UTRAN having STTD enable, the transceiver station is a node B and the steps are performed through control plane signaling across a Iub interface.

4. Method of claims 2 and 3 **characterized in that** the triggering switch conditions are selected from the following:
- if all UE have CQI<x dB AND Power consumption <50 % for both MCPA;
- if MCPA alarm is detected;
- if throughput counters statistics decrease when activating multiple antenna, then switch to single antenna;
- if there are no users supporting MIMO,
- if there is an MCPA failure.

5. Method of claims 2 and 3 **characterized in that** further identifying a first RRC Connection Request message with the Release information from a UE regarding whether it supports MIMO.

6. Method of claim 1 **characterized in that** the message carrying a switching indicator has only one bit, so that
- if the value is "0", then the two antennas are active and the values of power of a first (105a) and a second power sources (106a), being respectively P1 and P2, are substantially the same, P1=P2=X, and both switch means (105,106) are open;
- alternatively if the value is "1", then the second antenna is only active transmitting, P1=2X and only the second switch means are open.

7. Method of claim 6 **characterized in that** the message is sent by a RNC to a node B (100).

8. A system for dynamic switching between a multiple antenna transmission mode and single antenna transmission mode in a cellular telecommunications network the system having at least one base station node (100), at least, two antennas (200,201) being connected in parallel with the base station node (100), **characterized in that the system includes at least :**
a first switch means (105) the activation of which depends on the value of a unique signaling indicator, the first switch means (105) determining whether the connection with a first power source (105a) is allowed,
and a second switch means (106) the activation of which depends on the value of the unique signaling indicator, activating or not a second power source (106a),
wherein the system switches to multiple antenna transmission mode when values of power at the first power source (105a), and the second power source (106a) are the same, that value being X, and to single antenna transmission mode with the value of power at the second power source (106a) equal to 0, and the value at the first power source (105a) being substantially twice X, thereby maintaining the total energy of the system and without any service outage.

9. System of the claim 8 **characterized in that** the cellular telecommunications network is UTRAN, the base station node (100) is a node B and the unique signaling indicator includes a bit from the RNC to the node B (100).
